# EUROPÄISCHE PATENTSCHRIFT

(11) **EP 2 550 701 B1**
(45) Veröffentlichungstag und Bekanntmachung des Hinweises auf die Patenterteilung: **14.10.2015**
(21) Anmeldenummer: 11709017.5
(22) Anmeldetag: 11.03.2011
(51) Int. Cl.: H01M 10/44, H02J 7/00

(54) **AKKUMULATOREINHEIT UND LADEVERFAHREN**
RECHARGEABLE BATTERY UNIT AND CHARGING METHOD
ENSEMBLE ACCUMULATEUR ET PROCÉDÉ DE CHARGE

(30) Priorität: 25.03.2010 DE 102010012854
(43) Veröffentlichungstag der Anmeldung: 30.01.2013
(73) Patentinhaber: Diehl Aerospace GmbH, 88662 Überlingen (DE)
(72) Erfinder: NIEBERLEIN, Uwe, 91154 Roth (DE); STUHLMACHER, Dennis, 55545 Bad Kreuznach (DE)
(74) Vertreter: Riepl, Hubert Johann
(86) Internationale Anmeldenummer: PCT/EP2011/001206
(87) Internationale Veröffentlichungsnummer: WO 2011/116887

(56) Entgegenhaltungen:
- EP-A2- 1 263 110
- WO-A2-98/23021
- DE-A1-102005 011 081
- JP-A- 9 285 018
- JP-A- 10 021 967

## Beschreibung

Die vorliegende Erfindung betrifft eine Akkumulatoreinheit und ein Ladeverfahren zum Laden einer solchen Akkumulatoreinheit.

Nach dem Stand der Technik sind Nickel-Cadmium (NiCd) Akkumulatoren bekannt. Diese sind auf Grund des darin enthaltenen Schwermetalls Cadmium umweltgefährdend und im Wesentlichen nur noch für Spezialanwendungen, wie z. B. Notstromversorgungen, erlaubt.

Es ist zu erwarten, dass wegen abnehmender Verfügbarkeit Cadmium basierter Akkumulatoren zunehmend auch für Spezialanwendungen Cadmium freie Akkumulatoren zum Einsatz kommen werden. Insbesondere ist zu erwarten, dass Cadmium basierte Akkumulatoren gegen Cadmium freie Akkumulatoren ausgetauscht werden. Letzteres ist jedoch aufwändig, weil u. U. auch Peripheriegeräte wie Ladegeräte und dgl., ausgetauscht werden müssen.

Unterschiedliche Ladeverfahren, insbesondere zur Steuerung bzw. Regelung des Ladestroms bzw. des Ladestroms von NiMH-Zellen und Lithium-Zellen sind beispielsweise bekannt aus dem Dokumenten EP 1 263 110 A2, JP 10 021 967 A, JP 9 285 018 A, DE 10 2005 011 081 A1 und WP 98/23021 A2.

Es ist eine Aufgabe der Erfindung, eine Akkumulatoreinheit bereitzustellen, mit welcher ohne hohen Aufwand, insbesondere hinsichtlich der Kosten, herkömmliche Cadmium basierte Akkumulatoren ersetzt werden können. Ferner soll ein Verfahren zum Laden einer solchen Akkumulatoreinheit angegeben werden.

Diese Aufgabe wird gelöst durch die unabhängigen Ansprüche. Ausgestaltungen der Erfindung ergeben sich aus den abhängigen Ansprüchen.

Nach Patentanspruch 1 ist eine Akkumulatoreinheit mit zumindest einer Lithiumzelle mit einer vorgegebenen Lade-Endspannung vorgesehen, wobei die Akkumulatoreinheit zumindest eine Schalt-Einheit umfasst, welche derart ausgebildet ist, dass bei einem Ladevorgang mit einer Konstantstromquelle der Innenwiderstand der Akkumulatoreinheit bei Erreichen der Lade-Endspannung der Lithiumzelle derart verändert wird, dass eine an Polen eines zum Laden der Lithumzelle angeschlossenen Konstantstromladegeräts anliegende Spannung größer ist als die Abschaltspannung des Konstantstromladegeräts.

Als Innenwiderstand der Akkumulatoreinheit wird dabei der nach außen in Erscheinung tretende Widerstand der gesamten Akkumulatoreinheit, insbesondere einschließlich der Schalt-Einheit, verstanden. Bei dem Innenwiderstand handelt es sich insbesondere um denjenigen Widerstand oder diejenige Impedanz, welcher/welche einem zum Zwecke des Aufladens mit der Akkumulatoreinheit verbundenen Ladegerät gegenübersteht.

Bei der Lithiumzelle handelt es sich um eine Lithium basierte Akkumulatorzelle. Solche Akkumulatorzellen sind - zumindest derzeit - im Hinblick auf Umweltschädlichkeit unbedenklich.

Unter dem Begriff "schalten" wird im Rahmen der Erfindung insbesondere ein Vorgang verstanden, bei welchem die Akkumulatoreinheit in ihrem Verhalten nach außen, beispielsweise gegenüber einem Ladegerät, verändert wird. Eine solche Veränderung kann dabei bedeuten, dass die Akkumulatoreinheit von einem, insbesondere definierten, ersten Zustand in einen, insbesondere definierten, zweiten Zustand überführt wird, oder umgekehrt. Dazu können beispielsweise elektromechanische und/oder elektronische Schalter verwendet werden. Es ist jedoch auch möglich, dass die Veränderung dynamisch, insbesondere kontinuierlich und/oder quasikontinuierlich, erfolgt.

Die Akkumulatoreinheit ist dazu geeignet, bisherige NiCd Akkumulatoren zu ersetzen, ohne dass weitere maßgebliche Anpassungen oder Änderungen, insbesondere hinsichtlich der Ladegeräte, erforderlich wären. Das bedeutet im Speziellen, dass die bei herkömmlichen NiCd Systemen verwendeten Ladegeräte weiterhin verwendet werden können, wobei lediglich die NiCd Akkumulatoren durch Akkumulatoreinheiten mit Lithiumzellen ausgetauscht werden.

Letzteres ist insbesondere für Lithiumzellen, nicht ohne weiteres möglich, denn Lithiumzellen und NiCd Zellen erfordern jeweils unterschiedliche Ladeverfahren.

Während NiCd mit Konstantstromladegeräten geladen werden, benötigen Lithiumzellen Konstantspannungsladegeräte. Ein Aufladen von Lithiumzellen mit den für NiCd-Zellen verwendeten Konstantstromladegeräten wird mit der erfindungsgemäßen Akkumulatoreinheit möglich. Hierauf wird weiter unten noch genauer eingegangen.

Von besonderem Vorteil kann es sein, wenn die Schalt-Einheit derart ausgebildet ist, dass der Innenwiderstand zumindest einer der zumindest einen Akkumulatorzelle in Abhängigkeit der Ladespannung der Akkumulatorzelle verändert wird. Dabei kann die Ladespannung bzw. der Ladezustand lediglich einer oder aber auch mehrerer Akkumulatorzellen berücksichtigt werden. Lithiumzellen können bzw. sollen bekanntlich nicht über eine Lade-Endspannung hinaus aufgeladen werden. Wird nun bei der erfindungsgemäßen Akkumulatoreinheit der Innenwiderstand bei Erreichen der Lade-Endspannung derart verändert, insbesondere erhöht, dass die an den Polen eines Konstantstromladegeräts anfallende Spannung größer ist als dessen Abschaltspannung wird der Ladevorgang unterbrochen, so dass eine Beschädigung der Akkumulatorzelle/n durch weiteres Aufladen vermieden werden kann. Durch verändern des Innenwiderstands kann also vermieden werden, dass die Lithiumzelle/n bei Verwendung eines Konstantstromladegeräts über die maximal verträgliche Lade-Endspannung geladen werden.

Als Lade-Endspannung wird diejenige Spannung verstanden, bis zu welcher eine, mehrere oder alle Akkumulatorzellen der Akkumulatoreinheit aufgeladen werden sollen, bzw. können.

Die Schalt-Einheit kann eine Steuerung und ein damit gekoppeltes, zur Veränderung des Innenwiderstands ausgebildetes steuerbares Schaltelement umfassen. Vorzugsweise steuert die Steuerung das Schaltelement in Abhängigkeit der Ladespannung zumindest einer der zumindest einen Akkumulatorzelle. Auch ist es möglich, dass die Ladespannungen mehrerer oder aller Akkumulatorzellen überwacht werden.

Die Schalt-Einheit kann zumindest ein, insbesondere steuerbares, Bauelement umfassen, ausgewählt aus der Gruppe: ohmscher Widerstand, Halbleiterbauelement mit veränderbarer oder steuerbarer Impedanz, insbesondere Transistor, MOSFET. Zur Veränderung des Innenwiderstands kann eines oder mehrere der Bauelemente mit der oder den Akkumulatorzellen in Reihe geschaltet werden, oder eine bereits hergestellte Reihenschaltung kann wieder aufgehoben werden. Die Ausbildung oder Aufhebung der Reihenschaltung kann dabei mittels eines Schalters, insbesondere eines elektromechanischen und/oder elektronischen Schalters, insbesondere Halbleiterschalters, erfolgen.

Sofern die Akkumulatoreinheit mehrere Akkumulatorzellen umfasst, kann jede der Akkumulatorzellen mit einer jeweiligen Schalt-Einheit gekoppelt sein bzw. zusammenwirken. Alternativ ist es auch möglich, dass eine Schalt-Einheit mit mehreren Akkumulatorzellen gekoppelt ist oder zusammenwirkt. Im einfachsten Fall ist für alle Akkumulatorzellen lediglich eine Schalt-Einheit vorgesehen. Der Innenwiderstand der Akkumulatoreinheit ist bei erfolgter Reihenschaltung im Wesentlichen gleich der Summe ais Widerstand bzw. Impedanz des Bauelements und dem Innenwiderstand der Akkumulatorzelle/n.

Nach Patentanspruch 5 ist ein Ladeverfahren zum Laden einer zumindest eine Lithiumzelle umfassenden Akkumulatoreinheit unter Verwendung eines Konstantstromladegeräts vorgesehen. Bei dem Ladeverfahren wird der Innenwiderstand der Akkumulatoreinheit bei Erreichen einer vorgegebenen Lade-Endspannung der Lithiumzelle derart erhöht, dass die an Polen des Konstantstromladegeräts anfallende Spannung größer ist als die Abschaltspannung des Konstantstromladegeräts, ; und wobei der Innenwiderstand der Akkumulatoreinheit bei Unterschreiten der Lade-Endspannung der Lithiumzelle derart erniedrigt wird, dass die an den Polen des Konstantstromladegeräts anfallende Spannung kleiner ist als die Abschaltspannung des Konstantstromladegeräts.

Durch die Veränderung, insbesondere Erhöhung, des Innenwiderstands wird erreicht, dass die an der gesamten Akkumulatoreinheit während des Ladevorgangs auftretende Spannung auf einen Wert erhöht wird, welcher über einer Abschaltspannung des Konstantstromladegeräts liegt. Alternativ ist es auch möglich, einen Spannungsverlauf zu simulieren der bei dem Konstantstromladegerät zu einer Beendigung des Ladevorgangs führt. Analog wird, wenn die Lithiumzelle wieder geladen werden soll, der Innenwiderstand entsprechend verändert werden, so dass das Ladegerät den Ladevorgang fortsetzt.

Auf diese Weise kann, wie oben bereits erläutert, der Ladevorgang abgebrochen werden, wenn zumindest eine der zumindest einen Lithiumzelle der Akkumulatoreinheit eine vorgegebene, insbesondere maximale, Lade-Endspannung erreicht hat. Ein weiterer Ladevorgang, der möglicherweise zur Zerstörung der Akkumulatoreinheit, konkret der Lithiumzelle/n führen würde, kann unterbunden werden.

Die jeweilige momentane Ladespannung/en einer oder mehrerer Lithiumzellen kann dabei fortlaufend oder in gewissen Abständen erfasst werden. Dazu kann Spannungskontrolleinheit vorgesehen sein, welche insbesondere Bestandteil der Steuerung sein kann. Auf der Grundlage der erfassten jeweiligen Ladespannung/en kann die Steuerung den Innenwiderstand in der gewünschten Weise gezielt verändern. Eine solche Veränderung kann, wie bereits erwähnt, sprunghaft oder kontinuierlich erfolgen.

Insbesondere bei NiCd-Zellen werden Konstantstromladegeräte verwendet, welche bei Erreichen einer Abschaltspannung den Ladevorgang unterbrechen, um z. B. ein Überladen oder ein Laden nicht mehr funktionsfähiger Akkumulatoren zu vermeiden. Die bei NiCd-Zellen verwendeten Konstantstromladegeräte eignen sich, wie bereits erwähnt, nicht ohne weitere Maßnahmen zum Aufladen von Lithium basierten Akkumulatoren. Mit Konstantstromladegeräten würden ohne weitere Maßnahmen die bei Lithiumzellen einzuhaltenden maximalen Lade-Endspannungen überschritten werden, was zu deren Zerstörung führen würde.

Mit dem vorgeschlagenen Verfahren ist es nun möglich, dass der Ladevorgang zu einer Zeit unterbrochen wird, zu welcher noch nicht mit ladebedingten Beschädigungen zu rechnen ist. Insbesondere kann vermieden werden, dass die Lade-Endspannung überschritten wird. Die Unterbrechung des Ladevorgangs erfolgt dadurch, dass bei erreichen der vorgegebenen Lade-Endspannung der Innenwiderstand erhöht wird, so dass die über die Akkumulatoreinheit anliegende Spannung die Abschaltspannung Konstantstromladegeräts übersteigt. Alternativ ist es auch möglich, dass der Innenwiderstand derart verändert wird, dass ein Spannungsverlauf simuliert wird, der bei dem Konstantstromladegerät normalerweise zur Beendigung des Ladevorgangs führt. Es zeigt sich, dass mit dem vorgeschlagenen Verfahren Lithium basierte Akkumulatoreinheiten mit ursprünglich für NiCd-Zellen vorgesehenen Ladegeräten problemlos geladen werden können. Mit der Veränderung des Innenwiderstands kann der Ladevorgang entweder über die vorgesehene Zwangs-Abschaltung, oder durch Simulation des für NiCd-Zellen charakteristischen Spannungsverlaufs, beendet werden, ohne dass die Lade-Endspannung überschritten wird. Auf diese Weise ist ein vergleichsweise einfacher Ersatz von Cd-basierten Akkumulatoren durch andere, insbesondere Lithium basierte Akkumulatoreinheiten, möglich.

Die Veränderung des Innenwiderstands kann dadurch erreicht werden, indem zumindest eine der Lithiumzellen mit einem eine vorgegebene Impedanz aufweisenden elektronischen Bauelement, d. h. einem zusätzlichen Verbraucher, in Reihe geschaltet wird. Entsprechend kann der Innenwiderstand erniedrigt werden, wenn die Reihenschaltung aufgehoben wird.

Bei dem Bauelement kann es sich handeln um einen ohmschen Widerstand und/oder ein Halbleiterbauelement mit veränderbarer oder steuerbarer Impedanz, insbesondere einen Transistor, MOSFET.

Die Reihenschaltung kann insbesondere unter Verwendung eines elektromechanischen und/oder elektronischen Schalters erfolgen.

Ausführungsbeispiele der Erfindung werden nachfolgend anhand der Figuren genauer beschrieben. Es zeigen:
- Fig. 1: eine mit einem Konstantstromladegerät verbundene Akkumulatoreinheit;
- Fig. 2: ein Ausführungsbeispiel eines Schaltelements einer Schalt-Einheit der Akkumulatoreinheit; und
- Fig. 3: ein weiteres Ausführungsbeispiel eines Schaltelements.

In den Ausführungsbeispielen wird die Akkumulatoreinheit für eine auf Lithium basierende Akkumulatorzelle beschrieben. Ferner werden in den Ausführungsbeispielen Akkumulatoreinheiten mit lediglich einer Lithiumzelle beschrieben. Es soll jedoch darauf hingewiesen werden, dass eine Akkumulatoreinheit, wie weiter oben angemerkt, auch mehrere Lithiumzellen und/oder mehrere Schalt-Einheiten aufweisen kann. Dabei können eine oder mehrere Schalt-Einheiten entweder einer oder mehreren Lithiumzellen zugeordnet sein.

In den Figuren werden gleiche oder funktionsgleiche Elemente stets mit den gleichen Bezugszeichen bezeichnet.

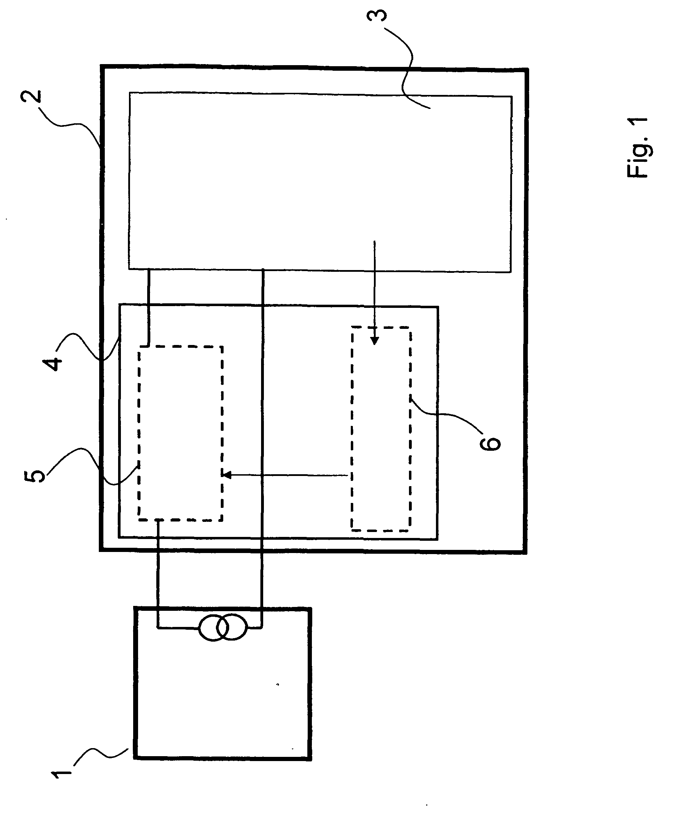

Fig. 1 zeigt eine mit einem Konstantstromladegerät 1 verbundene Akkumulatoreinheit 2. Die Akkumulatoreinheit 2 umfasst eine auf Lithium basierende Akkumulatorzelle 3, kurz Lithiumzelle 3. Ferner umfasst die Akkumulatoreinheit 2 eine Schalt-Einheit 4.

Die Funktion der Akkumulatoreinheit 2, insbesondere der Schalt-Einheit 4, ist wie folgt:
Wie bereits erwähnt, sind Cadmium basierte Akkumulatoren, wie NiCd Akkumulatoren als umweltgefährdend eingestuft worden. Aus diesem Grund ist es erforderlich, alternative Technologien zu finden bzw. zu verwenden. Wünschenswert dabei ist es jedoch, wenn alternative Technologien besonders einfach und ohne hohen Aufwand, insbesondere als Ersatz für die bisherigen NiCd Akkumulatoren, verwendet werden können.

Dabei ergibt sich mittelbar das Problem dass die für NiCd Akkumulatoren verwendeten und verfügbaren Ladegeräte nicht für Lithiumzellen geeignet sind. Das hat zur Folge, dass mit einem Umstieg auf Lithiumzellen auch alle Ladegeräte getauscht werden müssten. Dieses Problem hat die Erfindung erkannt hat und liefert eine Lösung, mit welcher insbesondere der Austausch oder Ersatz bisheriger NiCd Akkumulatoren durch Akkumulatoreinheiten mit Lithiumzellen vergleichsweise einfach möglich ist.

Allgemein formuliert wird dieses Problem dadurch gelöst, dass die Lithiumzelle 3 durch weitere Maßnahmen in ihrem Ladeverhalten derart verändert wird, dass bisherige NiCd Ladegeräte, bei welchen es sich um Konstantstromladegeräte handelt, unverändert verwendet werden können.

Die weiteren Maßnahmen bestehen insbesondere darin, dass die Lithiumzelle 3 mit einer Schalt-Einheit 4 gekoppelt ist/wird oder zusammenwirkt. Die Schalt-Einheit 4 ist dazu ausgebildet, den Innenwiderstand der Akkumulatoreinheit 2 zu verändern. Dadurch ist es möglich, die bei Konstantstromladegeräten 1, insbesondere bei Ladegeräten für NiCd Akkumulatoren, i.d.R notwendigerweise vorgesehene Zwangs-Abschaltung bei Überschreiten einer maximalen Ladespannung zu verwenden, um den Ladevorgang bei Erreichen einer maximalen Lade-Endspannung der Lithiumzelle 3 zu beenden. Das Vorsehen einer Zwangs-Abschaltung bei Konstantstromladegeräten ist üblich und erforderlich, denn bei alten oder defekten Akkumulatoren, bei welchen im Wesentlichen kein Ladestrom fließen kann, würde die Spannung beliebig hochgeregelt, was insbesondere aus Sicherheitsgesichtspunkten vermieden werden muss. Bei üblichen NiCd Ladegeräten erfolgt die Zwangs-Abschaltung bei einer Abschaltspannung, welche einer oberen bzw. maximal erlaubten NiCd Zellspannung, z. B. von 1.6 V pro Akkumulatorzelle, entspricht.

Der Hintergrund für die Beendigung des Ladevorgangs bei Erreichen der maximalen Lade-Endspannung wird anhand einer Gegenüberstellung von NiCd Akkumulatoren und Lithium basierten Akkumulatoren näher erläutert.

NiCd Akkumulatoren und Lithiumzellen 3 erfordern grundsätzlich verschiedene Ladevorgänge. Während bei NiCd Akkumulatoren Konstantstromladegeräte verwendet werden, sind für Lithiumzellen 3 als solche Konstantspannungsladegeräte erforderlich.

Das NiCd Konstantstromladegerät lädt den NiCd Akkumulator mit konstantem Strom, wobei sich die Zellspannung der NiCd Akkumulatorzelle von selber einstellt und mit zunehmendem Ladezustand ansteigt. Ist der NiCd Akkumulator aufgeladen, kann er die zugeführte Energie nicht mehr aufnehmen und erwärmt sich. Durch die Erwärmung erniedrigt sich der Zellinnenwiderstand und infolge dessen sinkt bei gleichbleibendem Ladestrom die Zellspannung. Das Konstantstromladegerät ist so ausgebildet, dass dieses das Absinken der Zellspannung, auch "- delta U" genannt, erkennt und als Trigger für die Beendigung des Ladevorgangs verwendet. Erkennt das Konstantstromladegerät also das Auftreten des "-delta U" wird der Ladevorgang für den NiCd Akkumulator beendet. Die dem NiCd Akkumulator während des Ladevorgangs zugeführte elektrische Momentanleistung, bleibt zunächst nahezu konstant und steigt bis zum "- delta U" noch etwas an. Um zu vermeiden, dass z. B. defekte NiCd Akkumulatoren mit unangemessen hohen Spannungen beaufschlagt werden, weisen die Konstantstromladegeräte eine Zwangs-Abschaltung auf, mit welcher der Ladevorgang unterbrochen wird, wenn die eine vorgegebene maximale Spannung erreicht wird.

Demgegenüber erfolgt der Ladevorgang bei herkömmlichen Lithiumzellen 3 mit konstanter Spannung, wobei zur Vermeidung zu hoher Stromstärken eine Strombegrenzung erforderlich ist. Dabei wird bzw. ist die Lade-Endspannung der Lithiumzelle 3 vorgegeben. Beim Ladevorgang stellt sich der Strom im Wesentlichen von selber ein. Unter Wirkung der Strombegrenzung wird der Ladestrom jedoch auf einen entsprechenden Maximalwert begrenzt, wenn und solange der Ladestrom den Maximalwert erreicht bzw. überschreitet. Am Ende des Ladevorgangs, an welchem die Lithiumzelle ihre Lade-Endspannung erreicht hat, sinkt der Ladestrom gegen Null. Der Ladevorgang der Lithiumzelle 3 wird vom Konstantspannungsladegerät beendet, wenn der Ladestrom einen vorgegebenen Stromwert unterschreitet. Die der Lithiumzelle 3 während des Ladevorgangs zugeführte elektrische Momentanleistung bleibt wegen der Strombegrenzung, ähnlich wie bei der NiCd Akkumulatorzelle, über einen gewissen Zeitraum zunächst nahezu konstant. Im Unterschied zur NiCd Akkumulatorzelle fällt die Momentanleistung ab dem Zeitpunkt, in dem die Lithiumzelle ihre Lade-Endspannung erreicht, mit dem Strom auf Null ab.

Es wird also deutlich, dass insbesondere so lange die Strombegrenzung beim Ladevorgang der Lithiumzelle 3 wirksam ist, die Ladekurve der Lithiumzelle 3 derjenigen von NiCd Akkumulatoren gleicht. Insoweit könnten hier die bei NiCd Akkumulatoren verwendeten Konstantstromladegeräte mit Spannungsabschaltung zum Laden der Lithiumzelle 3 verwendet werden. Ein Problem ergibt sich jedoch gegen Ende des Ladevorgangs, wenn die Lithiumzelle 3 ihre Lade-Endspannung erreicht, denn in diesem Fall würde bei Verwendung eines Konstantstromladegeräts die Spannung ansteigen, was eine Beschädigung oder Zerstörung der Lithiumzelle 3 zur Folge hätte. Denn mit Erreichen der Lade-Endspannung ist die Lithiumzelle 3 nicht mehr in der Lage die vom Konstantstromladegerät zugeführte Energie aufzunehmen. Wird der Ladevorgang dennoch fortgesetzt, führt das zur Beschädigung oder Zerstörung der Lithiumzelle.

Im Gegensatz zu NiCd Akkumulatoren reagieren Lithiumzellen 3 sehr empfindlich auf eine Beaufschlagung mit zu hohen Spannungen oberhalb der Lade-Endspannung, so dass das beim Ladevorgang vermieden werden muss.

Die Idee der Erfindung ist es nun, an dem Zeitpunkt den Ladevorgang zu beenden, an welchem die Lithiumzelle 3 ihre Lade-Endspannung erreicht bzw. erreicht hat. Das kann im Rahmen der Erfindung dadurch erreicht werden, dass der Innenwiderstand der Akkumulatoreinheit 2 (nicht der der Lithiumzelle 3) derart erhöht wird, dass die Ladespannung der Akkumulatoreinheit größer ist bzw. wird als eine Abschaltspannung die zu einer Zwangs-Abschaltung des Konstantstromladegeräts 1 führt. Alternativ wäre es auch möglich, den Innenwiderstand derart zu verändern, dass der bei einem NiCd Akkumulator auftretende Verlauf der Ladespannung, insbesondere die "- delta U" Abschaltbedingung, simuliert wird, ohne dass dabei die Lade-Endspannung der Lithiumzelle 3 überschritten wird.

Beim Laden einer Lithiumzelle 3 ist diese zu ca. 80% geladen, wenn die Lithiumzelle 3 ihre Lade-Endspannung erreicht hat. Dieser Ladezustand ist für viele Anwendungen durchaus akzeptabel, so dass eine Unterbrechung des Ladevorgangs zu diesem Zeitpunkt möglich und auch akzeptabel ist.

Beim Laden der Lithiumzelle 3 wird bei Erreichen ihrer Lade-Endspannung mittels der in den Ladestrompfad geschalteten Schalt-Einheit 4 die Gesamtspannung über die Akkumulatoreinheit 2 derart verändert, im vorliegenden Fall erhöht, so dass die Abschaltspannung, beispielsweise 1,6 V pro Akkumulatorzelle, erreicht wird und das Konstantstromladegerät, z. B. ein NiCd Ladegerät, den Ladevorgang unterbricht. Die Gesamtspannung wird dadurch erhöht, indem der Innenwiderstand der Akkumulatoreinheit 2 erhöht wird.

Die in Fig. 1 dargestellte Schalt-Einheit 4 umfasst ein Schaltelement 5 und eine Steuerung 6, welche das Schaltelement 5 steuert. Die Steuerung 6 überwacht die Zellspannung der Lithiumzelle 3 und aktiviert das Schaltelement 5, wenn die Lithiumzelle 3 ihre Lade-Endspannung erreicht hat. Das Schaltelement 5 ist derart ausgebildet, dass durch eine Erhöhung des Innenwiderstands verursachte Spannungserhöhung die Abschaltspannung zumindest erreicht wird. Dazu kann das Schaltelement 5 in einer einfachen Variante beispielsweise zwischen zwei Zuständen hin- und herschaltbar ausgebildet sein. Alternativ kann das Schaltelement 5 auch dazu ausgebildet sein, beliebig viele, insbesondere dynamische, Spannungserhöhungen zu ermöglichen, indem beispielsweise der Innenwiderstand kontinuierlich erhöht wird.

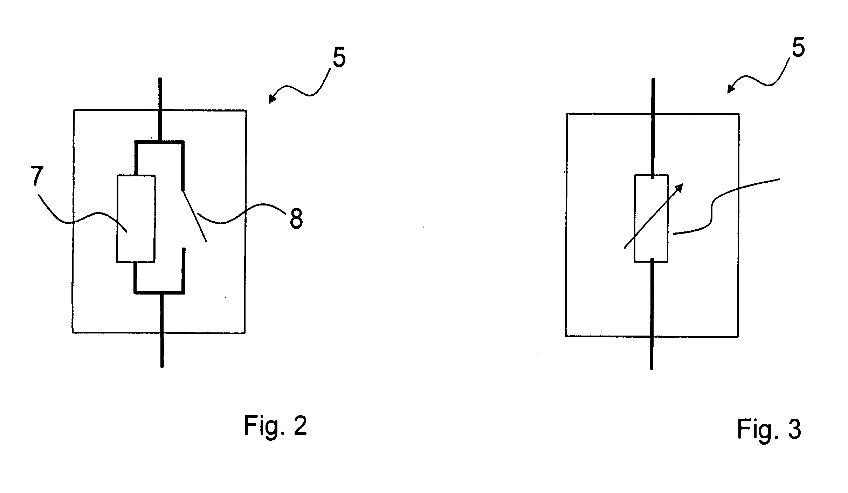

Fig. 2 zeigt ein Ausführungsbeispiel eines Schaltelements 5 der Schalt-Einheit 4. Das Schaltelement 5 umfasst einen ohmschen Widerstand 7 und einen steuerbaren Schalter 8, der mit der Steuerung 6 verbunden ist. Bei dem Schalter 7 kann es sich um einen steuerbaren elektromechanischen und/oder steuerbaren elektronischen Schalter 7 handeln.

So lange der Schalter 8 geschlossen ist, ist der Widerstand 7 über den Schalter 8 im Wesentlichen überbrückt, so dass über das Schaltelement 5 trotz fließendem Ladestrom keine oder im Wesentlichen keine Spannung abfällt. Sobald die Steuerung feststellt, dass die Lithiumzelle 3 die Lade-Endspannung erreicht hat, öffnet diese den Schalter 8. Bei geöffnetem Schalter 8 fließt der Ladestrom durch den Widerstand 7, verbunden mit einem entsprechenden Spannungsabfall. Das Konstantstromladegerät 1 sieht nun die Summe der Spannungen an Lithiumzelle 3 und Schaltelement 5. Der elektrische Widerstand 7 ist so dimensioniert, dass die Summe der Spannungen über der Abschaltspannung des Konstantstromladegeräts 1 liegt. Das führt dazu, dass der Ladevorgang vom Konstantstromladegerät aus beendet bzw. unterbrochen wird.

In einer Ausgestaltung kann vorgesehen sein, die Steuerung 6 derart auszubilden, dass der Schalter 8 geöffnet wird, wenn die Ladespannung der Lithiumzelle 3 unter einen vorgegebenen Wert sinkt, so dass die Lithiumzelle wieder geladen wird.

Die Leistung, die am Schaltelement 5, hier am Widerstand 7, vernichtet werden muss, hält sich für die vorliegenden Anwendungen in überschaubarer und akzeptabler Größe.

Fig. 3 zeigt ein weiteres Ausführungsbeispiel eines Schaltelements 5. Bei dem Schaltelement 5 der Fig. 3 handelt es sich um ein mit der Steuerung 6 steuerbares elektronisches Bauteil 9, welches den gegenüber dem Konstantstromladegerät 1 wirksamen Innenwiderstand der Akkumulatoreinheit 2 derart verändert, dass die Lithiumzelle 3 nicht über ihre Lade-Endspannung hinaus mit Spannung beaufschlagt wird, und dennoch eine ausreichende Ladekapazität der Lithiumzelle 3 sichergestellt werden kann. Beispielsweise kann der Innenwiderstand dynamisch angepasst, insbesondere erhöht oder verringert werden, so dass bei Erreichen eines vorgegebenen Ladezustands, z. B. der Lade-Endspannung, der Ladevorgang beendet wird, und der Ladevorgang bei unterschreiten eines vorgegebenen Ladezustands wieder aufgenommen oder fortgesetzt wird. Hier kann zum Beenden des Ladevorgangs entweder die Zwangs-Abschaltung des Konstantstromladegeräts 1 verwendet werden, oder aber der für NiCd Akkumulatoren typische Spannungsverlauf beim Ladevorgang simuliert werden, ohne dabei jedoch die Lade-Endspannung zu überschreiten. Letzteres kann beispielsweise dadurch erreicht werden, indem die für NiCd Akkumulatoren verwendete "- delta U" Abschaltbedingung simuliert wird.

Das Schaltelement 5 kann beispielsweise ein elektronisches Bauteil 9 umfassen, dessen Impedanz von der Steuerung 6 in einer der oben beschriebenen Art und Weise verändert oder beeinflusst werden kann. Hier kommen Halbleiterbauelemente, wie insbesondere Transistor, MOSFET und dgl. in Betracht.

Wie sich insbesondere aus den beschriebenen Ausführungsbeispielen und dem damit in Zusammenhang stehenden Ladeverfahren ergibt, können die der Erfindung zu Grunde liegenden Aufgaben erreicht werden. Insbesondere ist es möglich, die bisher verwendeten, umweltschädlichen NiCd Akkumulatoren durch umweltverträgliche Ersatz-Akkumulatoreinheiten auf Lithium Basis zu ersetzen, ohne dass Änderungen an den bereits in Betrieb befindlichen Geräten, wie Ladegeräten, erforderlich wären. Die Akkumulatoreinheit 2 kann vorteilhafter Weise so ausgebildet werden, dass Schnittstellen zum Ladegerät, Abmessungen und andere Parameter und Größen mit denjenigen der bisher verwendeten NiCd Akkumulatoren übereinstimmen. Auf diese Weise können Kompatibilitätsprobleme bereits von Anfang an vermieden werden, was bedeutet, dass die Akkumulatoreinheit 2 ohne weitere Maßnahmen an Stelle eines NiCd Akkumulators eingesetzt werden kann. Ein weiterer Vorteil besteht darin, dass das, insbesondere auf die Leistungsdichte bezogene, Gewicht der Lithium basierten Akkumulatoren geringer ist als bei vergleichbaren NiCd Akkumulatoren. Letzteres ist insbesondere im Bereich der Fahrzeugtechnik, insbesondere der Luftfahrttechnik, im Hinblick auf Gewichtseinsparung ein zusätzlicher positiver Effekt.

### Bezugszeichen

- 1: Konstantstromladegerät
- 2: Akkumulatoreinheit
- 3: Akkumulatorzelle, Lithiumzelle
- 4: Schalt-Einheit
- 5: Schaltelement
- 6: Steuerung
- 7: ohmscher Widerstand
- 8: steuerbarer Schalter
- 9: elektronisches Bauteil

## Patentansprüche

1. Akkumulatoreinheit (2), umfassend zumindest eine Lithiumzelle (3) mit einer vorgegebenen Lade-Endspannung und zumindest eine Schalt-Einheit (4), welche derart ausgebildet ist, dass bei einem Ladevorgang mit einem Konstantstromladegerät (1) der Innenwiderstand der Akkumulatoreinheit (2) bei Erreichen der Lade-Endspannung der Lithiumzelle (3) derart verändert wird, dass eine an Polen eines zum Laden der Lithiumzelle (3) angeschlossenen Konstantstromladegeräts (1) anliegende Spannung größer ist als die Abschaltspannung des Konstantstromladegeräts (1).

2. Akkumulatoreinheit (2) nach Anspruch 1 , wobei die Schalt-Einheit (4) eine Steuerung (6) und ein damit gekoppeltes, zur Veränderung des Innenwiderstands ausgebildetes steuerbares Schaltelement (5) umfasst, wobei die Steuerung (6) das Schaltelement (5) vorzugsweise in Abhängigkeit der Ladespannung zumindest einer der zumindest einen Lithiumzelle (3) steuert.

3. Akkumulatoreinheit (2) nach Anspruch 2, wobei das Schaltelement (5) zumindest ein elektronisches Bauelement (7, 9) umfasst, welches ausgewählt ist aus der Gruppe: ohmscher Widerstand (7), Halbleiterbauelement (9) mit veränderbarer oder steuerbarer Impedanz, insbesondere Transistor, MOSFET.

4. Akkumulatoreinheit nach einem der Ansprüche 1 bis 3, wobei das Schaltelement (5) oder die Schalt-Einheit (4) einen Schalter (8), vorzugsweise einen elektromechanischen und/oder elektronischen Schalter, insbesondere Halbleiterschalter, umfasst, mit welchem zur Veränderung des Innenwiderstands das Bauelement (7, 9) und Lithiumzelle (3) in Reihe schaltbar sind.

5. Ladeverfahren zum Laden einer zumindest eine Lithiumzelle (3) umfassenden Akkumulatoreinheit (2) unter Verwendung eines Konstantstromladegerät (1), wobei der Innenwiderstand der Akkumulatoreinheit (2) bei Erreichen einer vorgegebenen Lade-Endspannung der Lithiumzelle (3) derart erhöht wird, dass die an Polen des Konstantstromladegeräts (1) anfallende Spannung größer ist als die Abschaltspannung des Konstantstromladegeräts (1); und wobei , der Innenwiderstand der Akkumulatoreinheit (2) bei Unterschreiten der Lade-Endspannung der Lithiumzelle (3) derart erniedrigt wird, dass die an Polen des Konstantstromladegeräts (1) anfallende Spannung kleiner ist als die Abschaltspannung des Konstantstromladegeräts (1).

6. Verfahren nach Anspruch 5, wobei der Innenwiderstand dadurch verändert wird, indem zumindest eine der zumindest einen Lithiumzelle (3) mit einem eine vorgegebene Impedanz aufweisenden elektronischen Bauelement (7, 9) in Reihe geschaltet wird oder eine bestehende Reihenschaltung aufgehoben wird, oder die Impedanz eines in Reihe geschalteten Bauelements (9) verändert, insbesondere erhöht oder erniedrigt wird.

7. Verfahren nach Anspruch 6, wobei das Bauelement (7, 9) ausgewählt ist aus der Gruppe: ohmscher Widerstand (7), Halbleiterbauelement (9) mit veränderbarer oder steuerbarer Impedanz, insbesondere Transistor, MOSFET.

8. Verfahren nach einem der Ansprüche 6 oder 7, wobei eine Reihenschaltung von Bauelement (7, 9) und zumindest einer der zumindest einen Lithiumzelle (3), unter Verwendung eines elektromechanischen und/oder elektronischen, vorzugsweise steuerbaren, Schalters (8) erfolgt oder aufgehoben wird.

9. Akkumulator-Ladesystem umfassend eine Akkumulatoreinheit (2) und ein zum Laden der Akkumulatoreinheit (2) an dessen Pole angeschlossene Konstantstromladegerät (1), wobei die Akkumulatoreinheit (2) zumindest eine Lithiumzelle (3) mit einer vorgegebenen Lade-Endspannung und zumindest eine Schalt-Einheit (4) aufweist, welche ausgebildet ist, den Innenwiderstand der Akkumulatoreinheit (2) bei Erreichen der Lade-Endspannung derart zu verändern, dass die an Polen anliegende Spannung größer ist als die Abschaltspannung des Konstantstromladegeräts (1).

10. Akkumulator-Ladesystem nach Anspruch 9, wobei die Schalt-Einheit (4) eine Steuerung (6) und ein damit gekoppeltes, zur Veränderung des Innenwiderstands ausgebildetes steuerbares Schaltelement (5) umfasst, wobei die Steuerung (6) das Schaltelement (5) vorzugsweise in Abhängigkeit der Ladespannung zumindest einer der zumindest einen Lithiumzelle (3) steuert.

11. Akkumulator-Ladesystem nach Anspruch 10, wobei das Schaltelement (5) zumindest ein elektronisches Bauelement (7, 9) umfasst, welches ausgewählt ist aus der Gruppe: ohmscher Widerstand (7), Halbleiterbauelement (9) mit veränderbarer oder steuerbarer Impedanz, insbesondere Transistor, MOSFET.

12. Akkumulator-Ladesystem nach einem der Ansprüche 9 bis 11, wobei das Schaltelement (5) oder die Schalt-Einheit (4) einen Schalter (8), vorzugsweise einen elektromechanischen und/oder elektronischen Schalter, insbesondere Halbleiterschalter, umfasst, mit welchem zur Veränderung des Innenwiderstands das Bauelement (7, 9) und Akkumulatorzelle (3) in Reihe schaltbar sind.

## Claims

1. Rechargeable battery unit (2) comprising at least one lithium cell (3) having a predefined final charging voltage and at least one switching unit (4), which is designed in such a way that during a charging process with a constant-current charger (1), the internal resistance of the rechargeable battery unit (2) upon the final charging voltage of the lithium cell (3) being attained is varied in such a way that a voltage present at poles of a constant-current charger (1) connected for charging the lithium cell (3) is greater than the switch-off voltage of the constant-current charger (1).

2. Rechargeable battery unit (2) according to Claim 1, wherein the switching unit (4) comprises a controller (6) and a controllable switching element (5) coupled thereto and designed for varying the internal resistance, wherein the controller (6) controls the switching element (5) preferably in a manner dependent on the charging voltage of at least one of the at least one lithium cell (3).

3. Rechargeable battery unit (2) according to Claim 2, wherein the switching element (5) comprises at least one electronic component (7, 9) selected from the group: ohmic resistor (7), semiconductor component (9) having variable or controllable impedance, in particular transistor, MOSFET.

4. Rechargeable battery unit according to any of Claims 1 to 3, wherein the switching element (5) or the switching unit (4) comprises a switch (8), preferably an electromechanical and/or electronic switch, in particular semiconductor switch, with which the component (7, 9) and lithium cell (3) can be connected in series for the purpose of varying the internal resistance.

5. Charging method for charging a rechargeable battery unit (2) comprising at least one lithium cell (3) using a constant-current charger (1), wherein the internal resistance of the rechargeable battery unit (2) upon a predefined final charging voltage of the lithium cell (3) being attained is increased in such a way that the voltage obtained at the poles of the constant-current charger (1) is greater than the switch-off voltage of the constant-current charger (1); and wherein the internal resistance of the rechargeable battery unit (2) upon the final charging voltage of the lithium cell (3) being undershot is decreased in such a way that the voltage obtained at poles of the constant-current charger (1) is less than the switch-off voltage of the constant-current charger (1).

6. Method according to Claim 5, wherein the internal resistance is varied by virtue of the fact that at least one of the at least one lithium cell (3) is connected in series with an electronic component (7, 9) having a predefined impedance or an existing series connection is cancelled, or the impedance of a series-connected component (9) is varied, in particular increased or decreased.

7. Method according to Claim 6, wherein the component (7, 9) is selected from the group: ohmic resistor (7), semiconductor component (9) having variable or controllable impedance, in particular transistor, MOSFET.

8. Method according to either of Claims 6 and 7, wherein a series connection of component (7, 9) and at least one of the at least one lithium cell (3) is effected or cancelled, using an electromechanical and/or electronic, preferably controllable switch (8).

9. Rechargeable battery charging system comprising a rechargeable battery unit (2) and a constant-current charger (1) connected for charging the rechargeable battery unit (2) at its poles, wherein the rechargeable battery unit (2) comprises at least one lithium cell (3) having a predefined final charging voltage and at least one switching unit (4) which is designed to vary the internal resistance of the rechargeable battery unit (2) upon the final charging voltage being attained in such a way that the voltage present at the poles is greater than the switch-off voltage of the constant-current charger (1).

10. Rechargeable battery charging system according to Claim 9, wherein the switching unit (4) comprises a controller (6) and a controllable switching element (5) coupled thereto and designed for varying the internal resistance, wherein the controller (6) controls the switching element (5) preferably in a manner dependent on the charging voltage of at least one of the at least one lithium cell (3).

11. Rechargeable battery charging system according to Claim 10, wherein the switching element (5) comprises at least one electronic component (7, 9) selected from the group: ohmic resistor (7), semiconductor component (9) having variable or controllable impedance, in particular transistor, MOSFET.

12. Rechargeable battery charging system according to any of Claims 9 to 11, wherein the switching element (5) or the switching unit (4) comprises a switch (8), preferably an electromechanical and/or electronic switch, in particular semiconductor switch, with which the component (7, 9) and rechargeable battery cell (3) can be connected in series for the purpose of varying the internal resistance.

## Revendications

1. Unité d'accumulation (2), comprenant au moins une pile au lithium (3) avec une tension finale de charge et au moins une unité de commutation (4), laquelle est réalisée de manière à ce que, lors d'un processus de charge avec un appareil de charge à courant constant (1), la résistance interne de l'unité d'accumulation (2) est modifiée en atteignant la tension finale de charge de la pile au lithium (3) de manière à ce qu'une tension appliquée aux pôles d'un appareil de charge à courant constant (1) raccordé pour la charge de la pile au lithium (3) soit supérieure à la tension de relâchement de l'appareil de charge à courant constant (1).

2. Unité d'accumulation (2) selon la revendication 1, dans laquelle l'unité de commutation (4) comprend une commande (6) et un élément de commutation commandable (5) couplé avec celle-ci réalisé pour la modification de la résistance intérieure, dans laquelle la commande (6) assure la commande de l'élément de commutation (5) de préférence en fonction de la tension de charge d'au moins une de la pile ou les piles au lithium (3).

3. Unité d'accumulation (2) selon la revendication 2, dans laquelle l'élément de commutation (5) comprend au moins un composant électronique (7, 9), lequel est sélectionné dans le groupe formé par : une résistance ohmique (7), un composant à semi-conducteur (9) à impédance modifiable ou réglable, en particulier un transistor MOSFET.

4. Unité d'accumulation selon l'une des revendications 1 à 3, dans laquelle l'élément de commutation (5) ou l'unité de commutation (4) comprend un commutateur (8), de préférence un commutateur électromécanique et/ou électronique, en particulier un commutateur à semi-conducteur, avec lequel le composant (7, 9) et la pile au lithium (3) peuvent être couplés en série pour la modification de la résistance interne.

5. Procédé de charge pour la charge d'une unité d'accumulation (2) comprenant au moins une pile au lithium (3) en utilisant un appareil de charge à courant constant (1), dans lequel la résistance interne de l'unité d'accumulation (2) est augmentée en atteignant une tension finale de charge prescrite de la pile au lithium (3) de manière à ce que la tension produite aux pôles de l'appareil de charge à courant constant (1) soit supérieure à la tension de relâchement de l'appareil de charge à courant constant (1) ; et dans lequel, en cas de dépassement par le bas de la tension finale de charge de la pile au lithium (3), la résistance interne de l'unité d'accumulation (2) est abaissée de manière à ce que la tension produite aux pôles de l'appareil de charge à courant constant (1) soit inférieure à la tension de relâchement de l'appareil de charge à courant constant (1).

6. Procédé selon la revendication 5, dans lequel la résistance interne est modifiée en ce qu'au moins une de la pile ou les piles au lithium (3) est couplée en série avec un composant électronique (7, 9) présentant une impédance prescrite ou bien en ce qu'un couplage en série existant est supprimé, ou en ce que l'impédance d'un composant (9) couplé en série est modifiée, en particulier augmentée ou abaissée.

7. Procédé selon la revendication 6, dans lequel le composant (7, 9) est sélectionné dans le groupe formé par : une résistance ohmique (7), un composant à semi-conducteur (9) à impédance modifiable ou réglable, en particulier un transistor MOSFET.

8. Procédé selon l'une des revendications 6 ou 7, dans lequel un couplage en série du composant (7, 9) et d'au moins une de la pile ou les piles au lithium (3) s'effectue, ou est supprimé en utilisant un commutateur (8) électromécanique. et/ou électronique, de préférence commandable.

9. Système de charge d'accumulateur comprenant une unité d'accumulation (2) et un appareil de charge à courant constant (1) pour la charge de l'unité d'accumulation (2) et raccordé aux pôles de celle-ci, dans lequel l'unité d'accumulation (2) présente au moins une pile au lithium (3) avec une tension finale de charge prescrite et au moins une unité de commutation (4), laquelle est réalisée pour modifier la résistance interne de l'unité d'accumulation (2) à l'atteinte de la tension finale de charge de manière à ce que la tension appliquée à des pôles soit supérieure à la tension de relâchement de l'appareil de charge à courant constant (1).

10. Système de charge d'accumulateur selon la revendication 9, dans lequel l'unité de commutation (4) comprend une commande (6) et un élément de commutation commandable (5) couplé avec celle-ci pour la modification de la résistance interne, dans lequel la commande (6) assure la commande de l'élément de commutation (5) de préférence en fonction de la tension de charge d'au moins une de la pile ou les piles au lithium (3).

11. Système de charge d'accumulateur selon la revendication 10, dans lequel l'élément de commutation (5) comprend au moins un composant électronique (7, 9), lequel est sélectionné dans le groupe formé par : une résistance ohmique (7), un composant à semi-conducteur (9) à impédance modifiable ou réglable, en particulier un transistor MOSFET.

12. Système de charge d'accumulateur selon l'une des revendications 9 à 11, dans lequel l'élément de commutation (5) ou l'unité de commutation (4) comprend un commutateur (8), de préférence un commutateur électromécanique et/ou électronique, en particulier un commutateur à semi-conducteur, avec lequel, pour la modification de la résistance interne, le composant (7, 9) et la pile d'accumulateur (3) peuvent être couplés en série.
